# EUROPÄISCHE PATENTANMELDUNG

(11) **EP 2 738 238 A1**
(43) Veröffentlichungstag der Anmeldung: **04.06.2014**
(21) Anmeldenummer: 13195121.2
(22) Anmeldetag: 29.11.2013
(51) Int. Cl.: C09K 21/14

(54) **Polymere Flammschutzmittel, Verfahren zu deren Herstellung und flammgeschützte Polymersysteme**

(30) Priorität: 30.11.2012 DE 102012023513
(71) Anmelder: Fraunhofer-Gesellschaft zur Förderung der angewandten Forschung e.V., 80686 München (DE); Karlsruher Institut für Technologie, 76131 Karlsruhe (DE)
(72) Erfinder: Barner, Leonie, 76297 Stutensee (DE); Eisenblätter, Jördis, 76229 Karlsruhe (DE); Fehrenbacher, Ulrich, 76185 Karlsruhe (DE); Barner-Kowollik, Christopher, 76297 Stutensee (DE); Lang, Christiane, 76149 Karlsruhe (DE)
(74) Vertreter: Pfenning, Meinig & Partner GbR

(57) **Zusammenfassung**

Erfindungsgemäß wird ein Verfahren zur Herstellung polymeren Flammschutzmittels bereitgestellt, wobei ein Polymer mit mindestens einem Flammschutzmittel chemisch kovalent über eine Click-Reaktion unter Bildung eines polymeren Flammschutzmittels verbunden wird. Darüberhinaus werden polymere Flammschutzmittel und flammgeschützte Polymersysteme bereitgestellt, welche über eine Click-Reaktion kovalent verknüpfte Polymere und Flammschutzmittel enthalten bzw. daraus bestehen. Ferner werden Verwendungsmöglichkeiten der polymeren Flammschutzmittel und flammgeschützten Polymersysteme aufgezeigt.

## Beschreibung

Erfindungsgemäß wird ein Verfahren zur Herstellung polymeren Flammschutzmittels bereitgestellt, wobei ein Polymer mit mindestens einem Flammschutzmittel chemisch kovalent über eine Click-Reaktion unter Bildung eines polymeren Flammschutzmittels verbunden wird. Darüberhinaus werden polymere Flammschutzmittel und flammgeschützte Polymersysteme bereitgestellt, welche über eine Click-Reaktion kovalent verknüpfte Polymere und Flammschutzmittel enthalten bzw. daraus bestehen. Ferner werden Verwendungsmöglichkeiten der polymeren Flammschutzmittel und flammgeschützten Polymersysteme aufgezeigt.

In Deutschland und der Welt werden jedes Jahr Tausende Menschen durch Brände verletzt oder sterben an deren Folgen. Der wirtschaftliche Schaden geht zudem in die Milliarden. Der Anteil an Kunststoffen in vielen Bereichen des täglichen Lebens, wie dem Bausektor, der Möbel- und Textilindustrie und der Automobilindustrie steigt kontinuierlich. Da Kunststoffe grundsätzlich brennbar sind, müssen zur Verringerung des Brandrisikos flammhemmende Stoffe in das Polymernetzwerk eingebracht werden.

Flammschutzmittel (FSM) können sowohl in der Entstehungsphase eines Brandes als auch zu einem späteren Zeitpunkt des Brandes auf physikalische (z.B. Kühlung durch endotherme Zersetzung, Verdünnung der Brandgase durch inerte Gase) und/oder chemische Weise (z.B. Carbonisierung, Abfangen von Radikalen in der Gasphase) wirken, indem sie die für Verbrennungen nötigen Prozesse unterbinden oder zumindest verlangsamen.

Bis zum heutigen Zeitpunkt werden aufgrund der meist hohe Flammschutzeigenschaften verstärkt halogenierte FSM eingesetzt. Diese fördern jedoch während eines Brandes die Bildung hochgiftiger und korrosiver Brandgase, wie Halogenwasserstoffsäuren, Dioxinen und Furanen. Etliche bromierte FSM sind zudem persistent. Viele halogenierte FSM sind aufgrund dieser Eigenschaften als PBT-Stoffe (persistent, bioakkumulativ, toxisch) deklariert. Gerade die Wirkung über einen Gasphasenmechanismus der halogenierten FSM führt bei Bränden zu einer großflächigeren Verteilung gefährlicher Verbindungen.

Darüber hinaus sind viele dieser FSM niedermolekulare Verbindungen. Diese sind häufig flüchtig und migrieren während des Gebrauchs der Kunststoffprodukte in die Umwelt.

Besonders bei Polystyrol und geschäumten Polystyrol fehlen nach derzeitigem Stand der Technik Alternativen zu den bromierten, organischen FSM. Zudem führt das bevorstehende Verbot einer zunehmenden Anzahl an halogenierten FSM dazu, dass sich verstärkt eine Nachfrage an Alternativen bildet. Da die Verwendung der halogenierten FSM keine zwingende technische Ursache besitzt, können diese durch andere geeignete FSM ersetzt werden.

Grundsätzlich werden zwei Typen von FSM unterschieden. Werden FSM durch Mischung in das Polymer eingebracht, spricht man von additiven FSM. Ein großer Nachteil dieser liegt darin, dass sich das FSM, wegen einer fehlenden Bindung an die Matrix, aus dieser migrieren kann, was neben einer Veränderung der Flammschutzwirkung vor allem zu merklichen Umweltbelastungen führen kann. Des Weiteren ist der Anteil an eingesetztem FSM meist sehr hoch, wodurch die materialspezifischen Eigenschaften stark beeinflusst werden können. Dies ist im Besonderen für hochbelastete Konstruktionswerkstoffe ein Nachteil.

Wird das FSM kovalent an ein Polymer gebunden liegt es damit in einer homogenen Verteilung innerhalb des Polymers vor und kann darüber hinaus nicht aus dem Polymer migrieren. Die kovalente Anbindung von FSM an Polymere ist jedoch nur mit Schwierigkeiten verbunden und führt im Allgemeinen zu niedrigen Ausbeuten. Ferner sind die heutzutage auf dem Markt vorhandenen reaktiven FSM häufig nur für einen Polymertyp verwendbar.

Ausgehend hiervon war es Aufgabe der vorliegenden Erfindung, ein polymeres FSM bereitzustellen, welches in einfacher Art und Weise in hoher Ausbeute bereitgestellt werden kann und die aus dem Stand der Technik bekannten Nachteile überwindet.

Die Aufgabe wird gelöst durch das Verfahren zur Herstellung eines polymeren FSM gemäß Anspruch 1, das polymere FSM gemäß Anspruch 11, das flammgeschützte Polymersystem gemäß Anspruch 12 und die Verwendung des erfindungsgemäßen polymeren FSM und/oder flammgeschützten Polymersystems gemäß Anspruch 13.

Erfindungsgemäß wird somit ein Verfahren zur Herstellung polymerer FSM bereitgestellt, bei dem ein Polymer mit mindestens einem FSM kontaktiert wird, wobei das Polymer und das FSM für die Click-Chemie geeignete funktionelle Gruppen aufweisen und über eine Click-Reaktion das Polymer mit dem FSM chemisch kovalent unter Bildung eines polymeren FSM verbunden wird.

Unter Click-Chemie bzw. Click-Reaktion wird bevorzugt verstanden, dass die Reaktion zwischen Polymer und FSM folgendermaßen erfolgt:
■ orthogonal; und/oder
■ mit im Wesentlichen äquimolaren Konzentrationen an Click-Chemie geeigneten funktionellen Gruppen des FSM und Polymers. Das Konzentrationsverhältnis von den Click-Chemie geeigneten funktionellen Gruppen des FSM zu denen des Polymers kann 2:1, bevorzugt 1,5:1, besonders bevorzugt 1,2:1, insbesondere 1:1 betragen; und/oder
mit einer Ausbeute von ≥ 80%, bevorzugt ≥ 85%, besonders bevorzugt ≥ 90%, insbesondere ≥ 95%.

Der Terminus "Click-Chemie" geht auf K. Barry Sharpless zurück, der diesen Begriff im Jahre 2002 eingeführte. Bezüglich der Click-Chemie wird auf den Offenbarungsgehalt der Publikation von Kolb, Finn, Sharpless, Angew. Chem. 2001, 113, 2056-2075 und Barner-Kowollik, Du Prez., Espeel, Hawker, Junkers, Schlaad und Van Camp, Angew. Chem. Int. Id. 2011, 50, 60-62 verwiesen.

Mit dem erfindungsgemäßen Verfahren können verschiedene Polymertypen mit einer Vielzahl an clickfähigen FSM (z.B. clickfähige Organophosphor-Verbindungen) individuell auf ihre Anwendungsanforderungen eingestellt werden.

Ein wesentlicher Vorteil des erfindungsgemäßen Verfahrens ist, dass die FSM an vorbestimmten Stellen chemisch kovalent an das Polymer angebunden werden können. Es kann somit eine hohe Ortsselektivität der Anbindung erfolgen. Ferner kann die Anbindung dadurch homogen über das Polymergerüst verteilt werden, wodurch eine bessere Verteilung des FSM in dem Polymer (z.B. ein Gebrauchsgegenstand) und damit auch eine verbesserte Flammschutzwirkung erreicht werden kann. Zudem wird durch die chemisch kovalente Anbindung des FSM an das Polymer einer Entmischung von FSM und Polymer verhindert.

Die Herstellung von klassischen polymeren FSM, die zu Polymeren kompatibel sind, welche beispielsweise durch radikalische Polymerisation (z.B. Polystyrol), ROP, Polykondensation oder Polyaddition hergestellt werden, ist generell technisch sehr aufwendig. Dagegen ist die Herstellung der erfindungsgemäßen polymeren FSM aufgrund der Click-Reaktion verhältnismäßig einfach zu realisieren.

Das Verfahren kann dadurch gekennzeichnet sein, dass das Polymer und/oder FSM eine funktionelle Gruppe ausgewählt aus der Gruppe bestehend aus Alkingruppen, Azidgruppen, konjugierte Diene und substituierte Alkene und Thiolgruppen, aufweist.

Enthält entweder das Polymer eine Azidgruppe und das FSM eine Alkingruppe, oder umgekehrt, können Polymer und FSM über eine Azid-Alkin-Click-Reaktion chemisch kovalent miteinander verbunden werden. Der Vorteil an der Azid-Alkin-Click-Reaktion besteht darin, dass durch die Reaktion eine stickstoffhaltige Komponente in Form eines Triazol-Rings in das polymere FSM eingebracht wird. Stickstoffhaltige Verbindungen weisen ebenfalls flammhemmende Eigenschaften auf. Hierbei wird deutlich, dass durch die Click-Reaktion *per se* eine weitere Verbesserung der Flammschutzeigenschaften des polymeren FSM bewirkt werden kann.

Bei der Click-Reaktion kann es sich um eine der folgenden Reaktionen handeln:
■ Cycloadditionsreaktionen ungesättigter Verbindungen, besonders 1,3-Dipolare Cycloadditionen und/oder Diels-Alder-Reaktionen, insbesondere Huisgen-Cycloadditionen,
■ nukleophilen Substitutionen, insbesondere Ringöffnungsreaktionen von gespannten heterozyklischen Elektrophilen wie z.B. Epoxiden, Aziridinen, Aziridiniumionen und/oder Episulfoniumionen,
■ nichtaldolartige Carbonylreaktionen wie z.B. die Bildung von Harnstoffen, Thioharnstoffen, aromatischen Heterocyclen, Oximen, Hydrazonen und Amiden, und/oder
■ Additionen an C-C-Mehrfachbindungen, besonders oxidative Additionen an C-C-Mehrfachbindungen wie z.B. Epoxidierungen, Dihydroxylierungen, Aziridinierungen und/oder Sulfenylhalogenadditionen, und/oder
■ Michael-Additionen von Nu-H-Reaktanten.

Bevorzugt ist hierbei die Huisgen-Cycloaddition, also eine Azid-Alkin-Click-Reaktion, welche insbesondere über eine Cu(I)-katalysierte Huisgen-[1,3]-dipolaren Cycloaddition realisiert werden kann. Somit ist es möglich, schnell kombinatorische Bibliotheken von funktionellen Polymeren und flammhemmenden Verbindungen zu erstellen.

Ein über die Huisgen-Cycloaddition hergestelltes polymeres FSM kann zugleich in verschiedenen Temperaturbereichen wirken, wenn das kovalent angebundene FSM in einem anderen Temperaturbereich wirkt als der durch die Huisgen-Clycloaddition generierte Triazol-Ring. Zum Beispiel werden die Bindungen im Triazol-Ring in einem anderen Temperaturbereich geöffnet als die Bindungen von Organophosphor-Verbindungen als FSM. Die Huisgen-Cylcoaddition lässt sich unter milden Bedingungen und ohne Entstehung von Nebenprodukten durchführen.

Darüberhinaus ist es bevorzugt, wenn verschiedene FSM (z.B. unterschiedliche Organophosphor-Verbindungen), welche in verschiedenen Temperaturbereichen wirken, über eine Click-Reaktion gleichzeitig/simultan chemisch kovalent mit dem Polymer verbunden werden. Dadurch ist es möglich, polymere FSM zu erzeugen, welche über einen sehr breiten Temperaturbereich flammhemmende Eigenschaften aufweisen.

In dem erfindungsgemäßen Verfahren kann das Polymer mit dem Flammschutzmittel in einem Reaktionsmedium, bevorzugt einem Lösungsmittel, kontaktiert werden. Hierbei ist das Lösungsmittel bevorzugt ausgewählt aus der Gruppe bestehend aus Lösungsmitteln, welche das Polymer lösen können, besonders bevorzugt organische Lösungsmittel, insbesondere aprotische Lösungsmittel.

Die Click-Reaktion kann über 30 min bis 70 Stunden, bevorzugt 1 bis 60 Stunden, besonders bevorzugt 2 bis 55 Stunden, insbesondere 5 bis 50 Stunden durchgeführt werden. Ferner kann die Click-Reaktion bei einer Temperatur von 10 bis 80 °C, bevorzugt 15 bis 60 °C, besonders bevorzugt 20 bis 40 °C, durchgeführt werden.

Das in dem Verfahren eingesetzte Polymer kann ausgewählt sein aus der Gruppe bestehend aus Thermoplasten, Duroplasten, Elastomeren und thermoplastischen Elastomeren, welche für die Click-Chemie geeignete funktionelle Gruppen enthalten. Bevorzugte Polymere sind beispielhaft Polystyrol, Polyethylenoxid, Polymethacrylat, Polyvinylacetat, Polyacrylat, Epoxidharz, polyacrylnitril, Polyetherpolyol, Polyesterpolyol, Polyurethan, Polyethersulfon, Polycarbonat, Polyester, Polyarylether, Polyesterharz und/oder Polyalkanoat (z.B. Polyhydroxybutyrat), welche für die Click-Chemie geeignete funktionelle Gruppen enthalten. Auch Derivate und Copolymere der bevorzugten Polymere können in dem Verfahren eingesetzt werden. Insbesondere ist für die Huisgen-Cycloaddition mit einem Alkin-haltigen FSM das Polymer Polystyrol-co-4-Vinylbenzylazid geeignet.

Das in dem erfindungsgemäßen Verfahren eingesetzte FSM kann ausgewählt sein aus der Gruppe bestehend aus halogenhaltigen FSM, halogenfreien FSM, stickstoffhaltigen FSM anorganischen Phosphorverbindungen und organischen Phosphorverbindungen, welche für die Click-Chemie geeignete funktionelle Gruppen enthalten. Bevorzugt werden halogenfreie FSM eingesetzt.

Darüberhinaus werden bevorzugt organische Phosphorverbindungen als FSM in dem erfindungsgemäßen Verfahren eingesetzt. Organophosphor-Verbindungen sind effiziente FSM, deren Schutzwirkung durch verschiedene Mechanismen entsteht. Sie wirken sowohl in der festen Phase durch Bildung einer Barriereschicht (Carbonisierung) als auch der Gasphase als Radikalfänger. Hierbei fängt das POₓ-Radikal, die für eine Verbrennung notwendigen, Radikale ab. Im Falle eines Brandes werden zudem kaum giftige und korrosive Gase freigesetzt. Darüberhinaus wurde gefunden, dass phosphorhaltigen Gruppen in der Seitenkette von Polymeren LOI-Werte von bis zu 54% ergeben (Prog. Polym. Sci., (2002) vol. 27, p. 1661-1712). Insbesondere ist die Verbindung Diphenyl-prop-2-yn-1-yl-phosphat (DPPP) dafür geeignet, über eine Huisgen-Cycloaddition mit einem Azid-haltigen Polymer zu einem polymeren FSM zu reagieren.

Erfindungsgemäß wird ein polymeres FSM bereitgestellt, welches nach dem erfindungsgemäßen Verfahren herstellbar ist.

Das thermische Zersetzungsverhalten der erfindungsgemäßen polymeren FSM kann über Thermogravimetrische Analyse (TGA) und Dynamische Differenzkalorimetrie (DSC) bestimmt werden.

Ein wichtiger Messwert zur Deklarierung von flammhemmenden Substanzen ist der minimale Wert an Sauerstoff in der Atmosphäre, bei dem ein zu untersuchender Stoff brennt. Dieser Wert wird mit Hilfe des limitierenden Sauerstoff-Index (LOI) ermittelt, bei dem kontinuierlich der Sauerstoff-Anteil in der Umgebungsluft erhöht wird. Materialien mit einem LOI < 21 % werden als entflammbar nach ISO-4589-2 bezeichnet. Materialien mit einem LOI > 26% werden als selbstlöschend angesehen.

Bevorzugt ist das erfindungsgemäße polymere FSM dadurch gekennzeichnet, dass es einen LOI-Wert größer als 24 aufweist.

Darüberhinaus wird ferner ein flammgeschütztes Polymersystem bereitgestellt, welches das erfindungsgemäße polymere FSM und ein Polymer ausgewählt aus der Gruppe bestehend aus Thermoplasten, Duroplasten, Elastomeren und thermoplastischen Elastomeren, bevorzugt Polystyrol, Polyethylenoxid, Polymethacrylat, Polyvinylacetat, Polyacrylat, Epoxidharz, Polyacrylnitril, Polyetherpolyol, Polyesterpolyol, Polyurethan, Polyethersulfon, Polycarbonat, Polyester, Polyarylether, Polyesterharz und/oder Polyalkanoat (z.B. Polyhydroxybutyrat), oder Derivate oder Copolymere hiervon, enthält.

Die Einarbeitung der erfindungsgemäßen polymeren FSM in gängige Polymere kann beispielsweise durch reaktive Kunststoffverarbeitungsverfahren (z.B. RTM, RIM), thermoplastische Verarbeitungsverfahren und/oder Extrusion erfolgen. Anschließend kann das Flammschutzverhalten des flammgeschütz-ten Polymersystems über LOI-Messungen und Flammschutztest wie UL 94 (inhaltsgleich IEC/DIN EN 60695-11-10 und -20) untersucht werden.

In einer bevorzugten Ausführungsform der Erfindung werden die erfindungsgemäßen polymeren FSM oder das erfindungsgemäße flammgeschützte Polymersystem zum Flammschutz von Naturstoffen oder Kunststoffen verwendet.

Anhand des nachfolgenden Beispiels soll der erfindungsgemäße Gegenstand näher erläutert werden, ohne diesen auf die hier dargestellten spezifischen Ausführungsformen einschränken zu wollen.

### Beispiel

### 1. Verfahren zur Herstellung einer alkinierten Organophosphor-Verbindung

Zu einem Äquivalent einer chlorierten Phosphorester-Verbindung gelöst in mehr als der 10-facher Menge eines aprotischen Lösungsmittels wird tropfenweise mindestens ein Äquivalent einer organischen Base bei < 0°C getropft. Nach Erwärmen auf Raumtemperatur wird die Lösung mindestens eine Stunde weiter gerührt. Nach erneuter Kühlung auf < 0°C werden tropfenweise mindestens zwei Äquivalente einer hydroxylierten Alkin-Verbindung zugegeben und einige Zeit bei dieser Temperatur gerührt. Nach Erwärmen auf Umgebungstemperatur und erneutem Rühren für mindestens zwei Stunden wird das Filtrat einrotiert. Das erhaltene Öl wird in einem aprotisch-mäßig polaren Lösungsmittel aufgenommen und mit gesättigter Ammoniumchlorid-Lösung mehrfach ausgeschüttelt. Nach Trocknung der organischen Phase wird die Lösung erneut bei 40°C einrotiert. Die erhaltene Verbindung wird über eine Säule aufgereinigt und erneut einrotiert.

### Herstellung von alkiniertem Diphenyl-prop-2-yn-1-yl-phosphat (DPPP)

Tropfenweise wird ein Äquivalent Triethylamin zu Phosphorsäurephenylchlorid (DPPC) gelöst in der 10-fachen Menge Tetrahydrofuran (THF) bei -5 °C getropft. Nach Erwärmen auf Raumtemperatur wird die Lösung eine Stunde gerührt. Nach erneuter Kühlung auf -10 °C werden tropfenweise zwei Äquivalente Propargylalkohol zugegeben und zwei Stunden bei dieser Temperatur gerührt. Nach erwärmen auf Raumtemperatur wird erneut für 2 h gerührt und anschließend das Filtrat bei 40°C einrotiert. Das erhaltene Öl wird in Tetrahydrofuran aufgenommen und mit gesättigter Ammoniumchlorid-Lösung mehrfach ausgeschüttelt. Nach Trocknung der organischen Phase über Natriumsulfat wird die Lösung erneut bei 40°C einrotiert. Man erhält ein leicht gelbes, klares Öl.

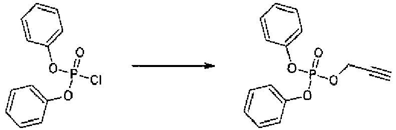

| | |
|---|---|
| ¹H-NMR (d-CHCl₃, 400 MHz): | *δ* /ppm = 7,34-7,31 (m, 4H, Ph-*H*) ; 7,19-7,16 (m, 6H, Ph-*H*) ; 4,84 - 4,82 (d, 2H, |
| | C*H*₂) ; 2,67 (s, 1H, C*H*) |
| | |
| ¹³C-NMR (d-CHCl₃, 400 MHz): | *δ*/ppm = 150; 130 ; 126; 120; 80 ; 57 |
| | |
| ³¹P-NMR (d-CHCl₃D, 400 MHz): | *δ*/ppm = 12,6 ppm |
| Zersetzungstemperatur (TGA): | T = 245 °C (unter N₂) |

### 2. Verfahren zur Herstellung eines clickfähigen Polymers

Eine Mischung aus variablen Anteilen eines Monomers, eines funktionalisierten Monomers, eines Initiators und eines Katalysators wird unter Eiskühlung mit einem inerten Gas entgast. Das Gemisch wird anschließend zur Reaktion gebracht und nach Abkühlen auf 0°C mehrfach ausgefällt. Das entstandene Copolymer wird unter Vakuum getrocknet.

Das Copolymer wird in einem geeigneten Lösungsmittel aufgenommen und mit einem Azid oder einer funktionalisierten Alkin-Verbindung umgesetzt. Nach mehrmaligem Ausfällen wird das clickfähige Copolymer im Vakuumtrockenschrank getrocknet.

### Herstellung eines azidierten Polystyrol-Copolymers mit Hilfe einer RAFT-Polymerisation und anschließender Azidierung

Eine Mischung aus variablen Anteilen von Styrol, 4-Vinylbenzylchlorid (VBC), Dibenyltrithiocarbonat (RAFT-Agens) und VAZO-88 wird unter Eiskühlung mit Argon entgast und bei 80°C für mehrere Stunden zur Reaktion gebracht. Nach Abkühlen auf 0°C wird die Lösung mit THF versetzt und in Methanol zwei Mal ausgefällt. Das entstandene PS-VBC-Copolymer wird unter Vakuum getrocknet.

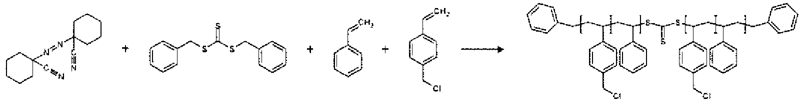

Das PS-VBC-Copolymer wird, bezogen auf den Anteil der VBC-Komponente, mit sechs Äquivalenten Natriumazid zur Azidierung in Dimethylformamid (DMF) aufgenommen und 60 Stunden bei Raumtemperatur gerührt. Nach Ausfällen in Wasser wird das azidierte Copolymer zwei Mal in THF aufgenommen und in Methanol gefällt. Die Trocknung erfolgt im Vakuumtrockenschrank.

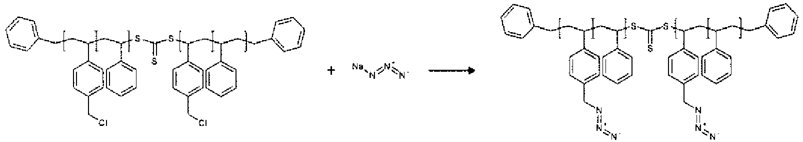

Die Polymerisation und die Azidierung werden mit Hilfe der Gravimetrie und NMR-Spektroskopie untersucht.

### PS-VBC-Copolymer

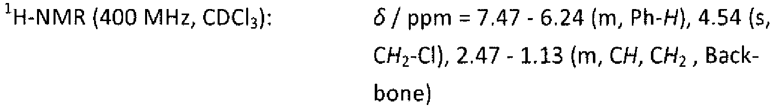

### Azidiertes Copolymer

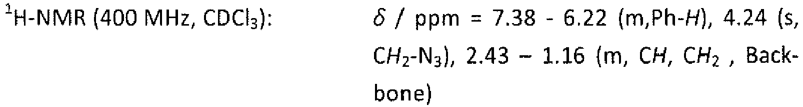

### 3. Verfahren zur chemisch kovalenten Anbindung_von_FSM an ein Polymer über die Huisgen-[1,3]-dipolare Cycloaddition

Eine Mischung aus clickfähigem Copolymer (z.B. aus Punkt 2. oben), mindestens 1,2 Äquivalenten einer geeigneten clickfähigen Organophosphor-Verbindung (z.B. aus Punkt 1. oben) und mindestens 0,2 Äquivalenten eines in situ generierten Kupfer(I)-Salzes wird in einem aprotischen Lösungsmittel mehrere Stunden bei Raumtemperatur zur Reaktion gebracht. Zur Entfernung des Katalysators wird die Lösung nach Zugabe von Ammoniak-Lösung über eine kleine mit neutralem Aluminiumoxid gefüllte Säule gegeben. Das Polymer wird mehrfach ausgefällt und anschließend unter Vakuum getrocknet.

### Herstellung eines polymeren FSM über die Anbindung einer alkinierten Organophosphor-Verbindung an ein azidiertes Styrol-Copolymer

Eine Mischung aus einem Äquivalent azidiertem Polystyrol-Copolymer, 1,2 Äquivalenten Diphenyl-prop-2-yn-1-yl-phosphat (DPPP), 0,2 Äquivalenten Kupfer(II)-Sulfat und 0,2 Äquivalenten Natriumascorbat wird in Dimethylformamid (DMF) bei Umgebungstemperatur für 48 h gerührt. Da hierbei ein nur partiell lösliches Polymer entsteht wird dieses zur Entfernung des Katalysators nach Zugabe von Ammoniak-Lösung in destilliertem Wasser und anschließend in Methanol ausgefällt. Das leicht bräunliche Polymer wird unter Vakuum getrocknet.

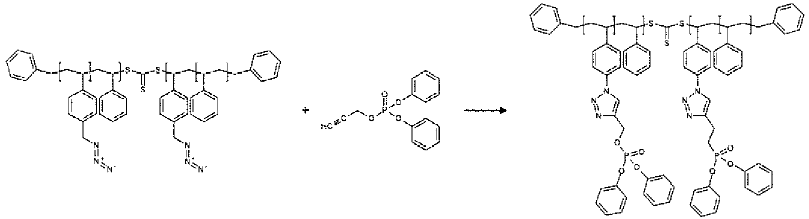

Die Quantität der Umsetzung wird mit Hilfe von Röntgenphotoelektronenspektroskopie (XPS) und Infrarotspektroskopie (IR) untersucht.

### XPS

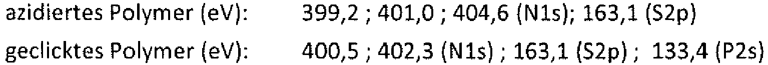

### IR

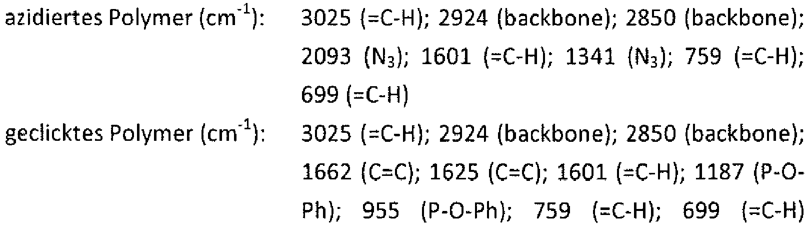

## Patentansprüche

1. Verfahren zur Herstellung polymerer Flammschutzmittel, bei dem ein Polymer mit mindestens einem Flammschutzmittel kontaktiert wird, wobei das Polymer und das Flammschutzmittel für die Click-Chemie geeignete funktionelle Gruppen aufweisen und über eine Click-Reaktion das Polymer mit dem Flammschutzmittel chemisch kovalent unter Bildung eines polymeren Flammschutzmittels verbunden wird.

2. Verfahren gemäß Anspruch 1, **dadurch gekennzeichnet, dass** die Click-Reaktion orthogonal erfolgt.

3. Verfahren gemäß Anspruch 1 bis 2, **dadurch gekennzeichnet, dass** das Polymer und Flammschutzmittel im Wesentlichen äquimolare Konzentrationen an Click-Chemie geeigneten funktionellen Gruppen aufweisen.

4. Verfahren gemäß einem der Ansprüche 1 bis 3, **dadurch gekennzeichnet, dass** die Click-Reaktion mit einer Ausbeute von ≥ 90%, bevorzugt ≥ 95%, besonders bevorzugt ≥ 98%, insbesondere ≥ 99% erfolgt.

5. Verfahren gemäß Anspruch 1 bis 4, **dadurch gekennzeichnet, dass** das Polymer und/oder Flammschutzmittel eine funktionelle Gruppe ausgewählt aus der Gruppe bestehend aus Alkingruppen, Azidgruppen, konjugierte Diene, substituierte Alkene und Thiolgruppen aufweist.

6. Verfahren gemäß Anspruch 1 bis 5, **dadurch gekennzeichnet, dass** die Click-Reaktion ausgewählt ist aus der Gruppe bestehend aus Cycloadditionsreaktionen ungesättigter Verbindungen, nukleophilen Substitutionen, nicht-aldolartige Carbonylreaktionen, Additionen an C-C-Mehrfachbindungen und/oder Michael-Additionen von Nu-H-Reaktanten, bevorzugt ausgewählt ist aus der Gruppe bestehend aus Huisgen-Cycloadditionen, Diels-Alder-Reaktionen, Epoxidierungsreaktionen und nukleophile Substitutionen an Epoxiden und/oder Aziridinen.

7. Verfahren gemäß einem der Ansprüche 1 bis 6, **dadurch gekennzeichnet, dass** das Polymer mit dem Flammschutzmittel in einem Reaktionsmedium kontaktiert wird, bevorzugt einem Lösungsmittel, wobei das Lösungsmittel bevorzugt ausgewählt ist aus der Gruppe bestehend aus Lösungsmitteln, welche das Polymer lösen können, besonders bevorzugt organische Lösungsmittel, insbesondere aprotische Lösungsmittel.

8. Verfahren gemäß einem der Ansprüche 1 bis 7, **dadurch gekennzeichnet, dass** die Click-Reaktion über 30 min bis 70 Stunden, bevorzugt 1 bis 60 Stunden, besonders bevorzugt 2 bis 55 Stunden, insbesondere 5 bis 50 Stunden und/oder bei einer Temperatur von 10 bis 80 °C, bevorzugt 15 bis 60 °C, besonders bevorzugt 20 bis 40 °C, durchgeführt wird.

9. Verfahren gemäß einem der Ansprüche 1 bis 8, **dadurch gekennzeichnet, dass** das Polymer ausgewählt ist aus der Gruppe bestehend aus Thermoplasten, Duroplasten, Elastomeren und thermoplastischen Elastomeren enthaltend für die Click-Chemie geeignete funktionelle Gruppen, bevorzugt Polystyrol, Polyethylenoxid, Polymethacrylat, Polyvinylacetat, Polyacrylat, Epoxidharze, Polyacrylnitril, Polyetherpolyol, Polyesterpolyol, Polyurethane, Polyethersulfon, Polycarbonat, Polyester, Polyarylether, Polyesterharz und/oder Polyalkanoat, enthaltend für die Click-Chemie geeignete funktionelle Gruppen, insbesondere Polystyrol-co-4-Vinylbenzylazid.

10. Verfahren gemäß einem der Ansprüche 1 bis 9, **dadurch gekennzeichnet, dass** das Flammschutzmittel ausgewählt ist aus der Gruppe bestehend aus halogenhaltigen Flammschutzmitteln, halogenfreien Flammschutzmitteln, stickstoffhaltigen Flammschutzmitteln, halogenhaltigen Phosphorverbindungen, anorganischen Phosphorverbindungen und organischen Phosphorverbindungen, enthaltend für die Click-Chemie geeignete funktionelle Gruppen, insbesondere Diphenyl-prop-2-yn-1-yl-phosphat (DPPP).

11. Polymeres Flammschutzmittel, herstellbar nach dem Verfahren gemäß einem der Ansprüche 1 bis 10.

12. Flammgeschütztes Polymersystem enthaltend ein polymeres Flammschutzmittel gemäß Anspruch 11 und ein Polymer ausgewählt aus der Gruppe bestehend aus Thermoplasten, Duroplasten, Elastomeren und thermoplastischen Elastomeren, bevorzugt Polystyrol, Polyethylenoxid, Polymethacrylat, Polyvinylacetat, Polyacrylat, Epoxidharze, Polyacrylnitril, Polyetherpolyol, Polyesterpolyol, Polyurethane, Polyethersulfon, Polycarbonat, Polyester, Polyarylether, Polyesterharz und/oder Polyalkanoat, oder Derivate sowie Copolymere hiervon.

13. Verwendung des polymeren Flammschutzmittels gemäß Anspruch 11 oder des flammgeschützten Polymersystems gemäß Anspruch 12 zum Flammschutz von Naturstoffen oder Kunststoffen.
